# EUROPÄISCHE PATENTSCHRIFT

(11) **EP 1 260 344 B1**
(45) Veröffentlichungstag und Bekanntmachung des Hinweises auf die Patenterteilung: **19.04.2006**
(21) Anmeldenummer: 02003386.6
(22) Anmeldetag: 14.02.2002
(51) Int. Cl.: B29D 31/50, B29D 31/508, B29C 45/67

(54) **Verfahren und Vorrichtung zum Aufbringen der Schliesskraft an einer Spritzgiessmaschine, insbesondere zur Herstellung von Schuhen**
Method and apparatus for applying the closing force in an injection moulding machine, in particular for producing footwear
Procédé et dispositif pour appliquer la force de fermeture dans une machine de moulage par injection, notamment pour fabriquer des chaussures

(30) Priorität: 27.04.2001 DE 10120878
(43) Veröffentlichungstag der Anmeldung: 27.11.2002
(73) Patentinhaber: KLÖCKNER DESMA SCHUHMASCHINEN GmbH, 28832 Achim (DE)
(72) Erfinder: Kraemer, Rudolf, 28832 Achim (DE)
(74) Vertreter: Röther, Peter

(56) Entgegenhaltungen:
- EP-A- 0 501 384
- FR-A- 858 416
- FR-A- 1 566 774
- US-A- 3 924 986

## Beschreibung

Die Erfindung betrifft ein Verfahren zum Aufbringen der Schließkraft an einer Spritzgießmaschine zur Herstellung von Schuhen und Sohlen hierfür, die mehrere Formwerkzeuge für die zu fertigende bzw. anzuformende Sohle aufweist, die jeweils aus Seitenformteilen, einem vertikal verfahrbaren Bodenstempel und einem Verdränger bzw. einem mit einem Schuhschaft bezogenen Leisten als obere Formhohlraumbegrenzung gebildet ist. Die Erfindung betrifft weiterhin eine Vorrichtung zur Durchführung dieses Verfahrens.

Derartige Vorrichtungen sind beispielsweise aus der US-A 3 924 986 bekannt.

Die Großserienfertigung von Schuhen geschieht heutzutage vor allem mit Hilfe von sogenannten Rundtischmaschinen, bei denen eine Vielzahl von das Formwerkzeug beinhaltenden Formstationen angeordnet sind und jede dieser Formstationen nach entsprechender Weiterdrehung des Tisches in die Plastifizier- und Einspritzstation gelangt.

Bei der Herstellung von Schuhen mit mehrschichtigen bzw. mehrfarbigen Sohlen wird dabei zunächst die Laufsohle gespritzt. Hierzu fährt der Bodenstempel nach oben, die Seitenformteile fahren zu und begrenzen den Formhohlraum seitlich. Als oberer Formhohlraumabschluß dient ein sogenannter Verdränger, der mittels Pneumatikzylindern verriegelt wird.

So vorbereitet wird die Form durch die Plastifizier- und Einspritzstation mit dem entsprechenden verflüssigten Kunststoff gefüllt. Es kann sich hierbei um PUR, TPU, GU sowie Kombinationen hiervon handeln. Nachdem der Formhohlraum verfüllt worden ist, wird der Bodenstempel mit weit erhöhter Kraft nach oben gefahren, so daß die langsam aushärtende Sohle in die gewünschte Form verpresst wird.

Die vertikale Bewegung des Bodenstempels, die zum einen aus einem Arbeitshub besteht, mit dem der Bodenstempel in die Verfüllposition gefahren wird und aus einem Krafthub, der zum Verpressen der Sohle dient, wird im Stand der Technik durch einen Hydraulikzylinder bewirkt.

Dieser Hydraulikzylinder muß entsprechend groß dimensioniert sein, damit er zum einen den Arbeitshub und zum anderen den Krafthub ausführen kann.

Das bedeutet, daß an einer derartigen Rundtischmaschine große Mengen an Hydrauliköl vorhanden sein müssen und bewegt werden. Insbesondere bei thermoplastischem Polyurethan und Gummi sind hohe Schließkräfte erforderlich, die bislang nur durch Hydraulikzylinder aufzubringen waren. Das Vorhandensein von Hydrauliköl bringt jedoch immer die Gefahr von Leckagen mit sich, was einerseits zu Gefährdungen des Personals und andererseits der Umwelt überhaupt führt.

Der Erfindung liegt daher die Aufgabe zugrunde, ein Verfahren der eingangs genannten Art so zu führen, dass der Hydraulikaufwand bei derartigen Maschinen entscheidend verringert und trotzdem eine für bestimmte Materialien erforderliche hohe Schließkraft erzeugt werden kann, wobei steuerungstechnisch und kräftemäßig eine große Bandbreite gewährleistet sein soll.

Eine weitere Aufgabe der Erfindung liegt darin, eine Vorrichtung zur Durchführung dieses Verfahrens anzugeben.

Verfahrensmäßig wird die Aufgabe dadurch gelöst, dass nach dem Aufsetzen und Verriegeln des Verdrängers der Bodenstempel mittels einer Kolben-Zylinderanordnung zunächst mit einem pneumatischen Arbeitshub in die Stellung zum Verfüllen des Hohlraums gefahren wird, wonach die Zylinder-Kolbenanordnung durch eine zweite, mit der ersten Zylinderkolbenanordnung in Verbindung stehende, aber räumlich von dieser getrennten Zylinder-Kolbenanordnung mittels einstellbarer variabler hydraulischer Kraftverstärkung einen hydraulischen Krafthub zum Verpressen des eingefüllten Materials zur Bildung der Sohle ausführt, der so lange gehalten wird, bis die Sohle formstabil ist, wobei bei einem vorgegebenen pneumatischen Arbeitsdruck der Arbeitshub mit einer konstanten Kraft und Krafthub mit einer regelbaren Kraft ausgeführt wird, die gleich ist oder größer als die Kraft des Arbeitshubes und durch Regelung des pneumatischen Drucks erzeugt wird, wobei bei der Ausführung des Arbeitshubes der ersten Kolbenzylinderanordnung der zweiten Kolben-Zylinderanordnung für die Ausführung des Krafthubs die erforderliche Menge an Hydraulikflüssigkeit von einem allen Formwerkzeugen gemeinsamen Speicher zur Verfügung gestellt wird.

Aus der EP 0 501 384 A2 ist zwar bereits eine Vorrichtung bekannt, die aus miteinander verbundenen Kolben-Zylinderanordnungen besteht, die allerdings bei Pressen eingesetzt wird, bei der Herstellung von Sohlen bzw. beim Anspritzen von mehrschichtigen Sohlen der erfindungsgemäßen Art aber nicht ohne weiters einsetzbar ist.

Die Kolben-Zylinderanordnung, die im folgenden Bodenstempelzylinder genannt wird, wird für ihren langen Arbeitshub mit Druckluft aus dem ohnehin vorhandenen Druckluftnetz (Arbeitsdruck beispielsweise 10 bar) betrieben. Lediglich für den kurzen Weg des Krafthubs (beispielsweise 12 mm) wird der Bodenstempelzylinder (erste Kolben-Zylinderanordnung) dann hydraulisch betrieben, wobei ihm aus einem Hydraulikölreservoir die erforderliche Menge von einem Speicher zugeführt wird.

Sobald die Sohle formstabil ist, wird das Hydrauliköl aus dem Bodenstempelzylinder (erste Kolben-Zylinderanordnung) zurück ins Reservoir gefördert, so daß ein geschlossener Kreislauf des Hydrauliköls vorhanden ist, wodurch die Gefahr von Leckagen minimiert ist und die Menge des erforderlichen Hydrauliköls gering gehalten werden kann.

Wie gesagt arbeitet die erfindungsgemäße Vorrichtung zur Durchführung des Verfahrens auf der Grundlage von beispielsweise 10 bar Luftdruck. Der Bodenstempelzylinder führt den Arbeitshub mit einer konstanten Kraft (beispielsweise 17 kN) aus. Der anschließende Krafthub wird mit einer regelbaren Kraft ausgeführt, die gleich ist oder größer als die Kraft des Arbeitshubes und durch Regelung des pneumatischen Drucks erzeugt wird. Durch die Regelbarkeit läßt sich beim Krafthub ein vorher definiertes, vom Werkstoff abhängiges Kraftprofil abfahren, das beispielsweise zwischen 17 und 200 kN liegen kann. Somit bietet das erfindungsgemäße Verfahren, anders als das aus der EP 0 501 384 A2 bekannte Verfahren steuerungstechnisch und kräftemäßig eine große Bandbreite. Die Kraft kann beim Krafthub die gleiche sein wie beim Arbeitshub. Eine derartige Kräftekonstellation wird gewählt, wenn nach Fertigstellung der Laufsohle diese Laufsohle über eine Zwischensohle an den auf dem Leisten aufgezogenen Schaft aufgespritzt werden soll. In diesem Fall wird der Verdränger von dem Leisten ersetzt, der jetzt die obere Formhohlraumbegrenzung darstellt.

Vorrichtungsmäßig zeichnet sich die Erfindung durch eine den Bodenstempel verfahrende Kolben-Zylinderanordung mit zwei gegeneinander abgedichteten Zylinderräumen aus, wobei in einem der Zylinderräume ein beidseitig mit Druckluft beaufschlagbarer Kolben verschiebbar ist, während im zweiten Zylinderraum ein einseitig mit einem hydraulischen Druckmedium beaufschlagbarer Kolben verschiebbar ist und beide Kolben starr miteinander verbunden sind, wobei das hydraulische Druckmedium mittels pneumatischen Drucks aus einem mit dem zweiten Zylinderraum verbundenen Reservoir in diesen hineindrückbar und aus diesem in das Reservoir zurückführbar ist.

Zur Durchführung des Arbeitshubs wird der im ersten Zylinderraum angeordnete Kolben mittels Druckluft in Richtung Formhohlraum verschoben. Der hierdurch entstehende Hohlraum im zweiten Zylinderraum wird mit Hydraulikflüssigkeit gefüllt. Zur Ausführung des Krafthubs wird dann mittels Druckluft die Hydraulikflüssigkeit im zweiten Zylinderraum unter hohen Druck gesetzt, so dass die erforderlichen Kräfte erreicht werden.

Im Reservoir mündet eine Hydraulikölleitung, die zu einem Speicher führt, der auf dem Rundtisch angeordnet ist und über entsprechende Leitungen mit jeder der Formstationen verbunden ist. Der Speicher steht unter einem Druck von beispielsweise 2 bar. Dieser Überdruck reicht aus, um beim Arbeitshub des Bodenstempelzylinders den Zylinderraum unterhalb des einseitig mit Hydraulikflüssigkeit beaufschlagbaren Kolbens zu füllen. Ein Vorteil dieser Ausführungsform ist darin zu sehen, dass hierdurch sehr viel größere Arbeitshübe durchführbar sind. Darüberhinaus hat diese Ausführungsform den Vorteil, dass die als Kraftverstärkungszylinder dienende Kolbenzylinderanordnung sehr klein bauen kann.

Gemäß Anspruch 3 ist zur Einstellung bzw. Variation der gewünschten Kraft beim Krafthub in die Druckluftversorgungsleitung zum beidseitig mit Druckluft beaufschlagbaren Kolben in der als Kraftverstärkungszylinder dienenden Kolben-Zylinderanordnung ein Druckregler eingebaut.

Das kann gemäß Anspruch 5 ein manuell verstellbarer Druckminderer sein oder gemäß Anspruch 6 ein von einem Bedienterminal einstellbares Proportionalventil.

Bei einer bevorzugten Ausführungsform der Erfindung ist gemäß Anspruch 4 der Bodenstempelzylinder mit einem im Längsschnitt T-förmigen Zylinderinnenraum ausgebildet, wobei der Querbalken des T den Zylinderraum repräsentiert, in dem der beidseitig mit Druckluft beaufschlagbare Kolben angeordnet ist und der Längsbalken des T den Zylinderraumm in dem der einseitig mit dem hydraulischen Medium beaufschlagbare Kolben angeordnet ist und beide Kolben eine Einheit bilden. Ein derartiger Zylinder zeichnet sich durch seine konstruktive Einfachheit aus.

Die Umschaltung der Kolbenbewegung des beidseitig beaufschlagbaren Kolbens im Kraftverstärkungszylinder erfolgt gemäß Anspruch 7 über ein Ventil (V3), welches unabhängig ist von den Ventilen (V1,V2) zur Umschaltung der Hubbewegung des beidseitig beaufschlagbaren Kolbens des Bodenstempelzylinders Hieraus ergibt sich die oben angesprochene Möglichkeit der Kraftregulierung.

Die Erfindung wird im folgenden anhand einer Zeichnung dargestellt und näher erläutert.

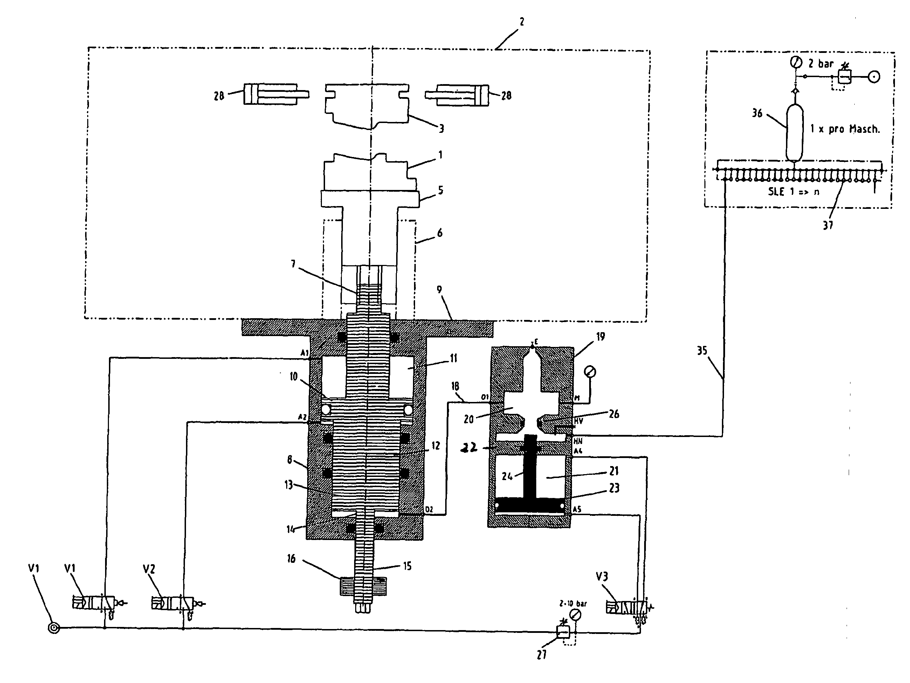

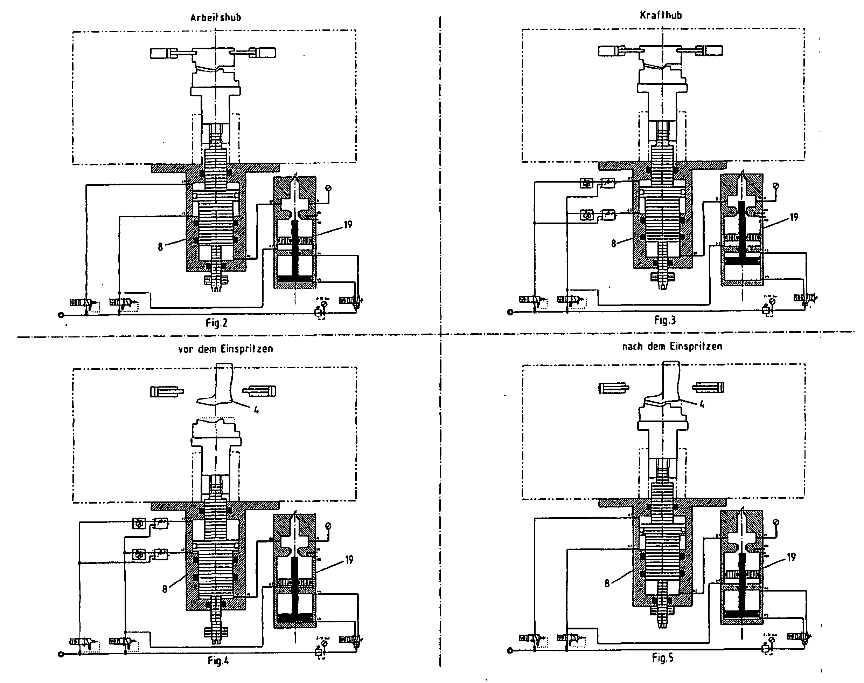

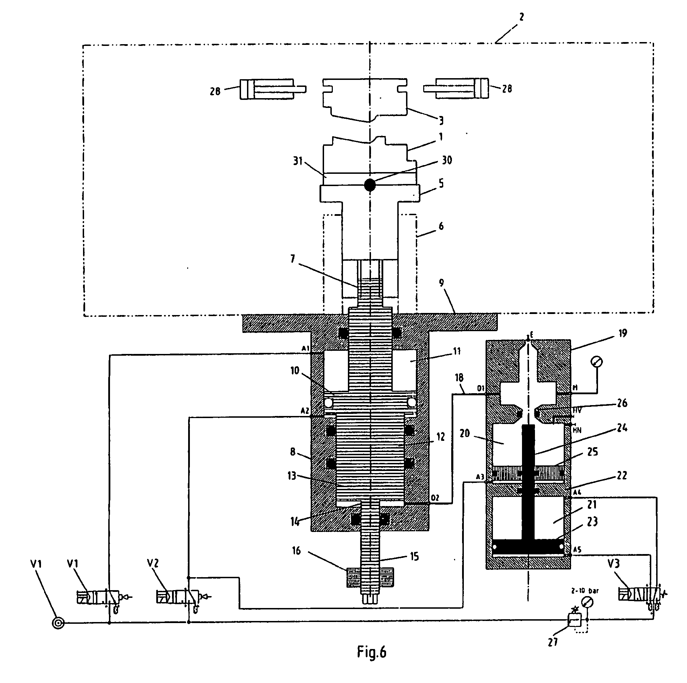

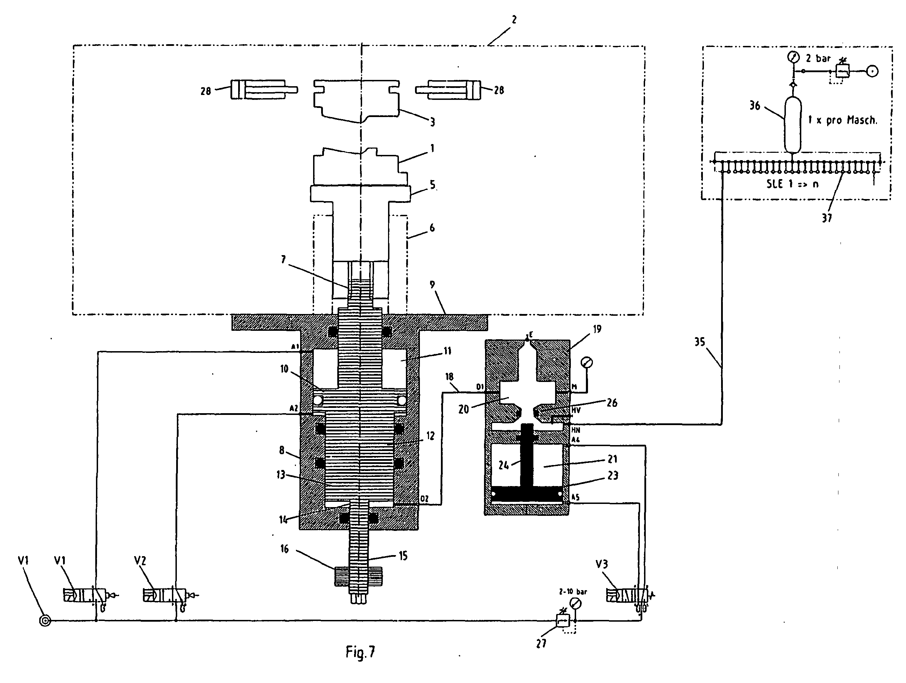

In der Figur ist schematisch die Antriebsvorrichtung für die Vertikalbewegung eines Bodenstempels 1 in einer Formstation 2 am nicht dargestellten Drehtisch einer Spritzgießmaschine für die Schuhherstellung dargestellt. Die Formstation 2 besteht au-ßer dem Bodenstempel 1 aus in den Figuren nicht dargestellten Seitenformteilen und einem Verdränger 3 bzw. einem Leisten. Bodenstempel 1, Verdränger 3 bzw. Leisten und die Seitenformteile bilden einen Hohlraum zur Herstellung einer Schuhsohle. In der Figur ist die Vorrichtung dargestellt, mit der eine Laufsohle hergestellt wird.

Nun wird zwischen Laufsohle und dem Leisten in den verbliebenen Hohlraum ein anderes oder andersfarbiges Material eingespritzt, um so eine Zwischensohle zur Verbindung der Laufsohle mit dem auf dem Leisten aufgezogenen Schaft herzustellen.

Der Bodenstempel 1 ist auf einem Hebetisch 5 montiert, der in einer Hebetisch-Führung 6 vertikal geführt ist. Von unten an den Hebetisch 5 greift die Kolbenstange 7 einer ersten Kolben-Zylinderanordnung an, die im weiteren als Bodenstempelzylinder 8 bezeichnet wird, der bei 9 an die Formstation angekoppelt ist.

Die Kolbenstange 7 führt zu einem Kolben 10, der über die Druckluftleitungen A1 und A2 beidseitig mit Pressluft beaufschlagbar ist. Mittels der Druckluft ist er in dem Zylinderinnenraum 11 verschiebbar, der in einen zweiten Zylinderraum 12 übergeht, der im Durchmesser kleiner ist als der Zylinderraum 11. Somit ergibt sich im Längsschnitt eine Form des gesamten Innenraums, die T-förmig genannt werden kann. Im Längsbalken des T, d.h. im zweiten Zylinderinnenraum 12, ist ein zweiter Kolben 13 angeordnet, der mit dem Kolben 10 eine Einheit bildet. Der Kolben 13 ist bei 14 über den Anschluß D2 mit Hydraulikflüssigkeit beaufschlagbar. Eine Kolbenstange 15 führt nach unten aus dem Zylinder 8 heraus und ist an seinem Ende mit einer Hubbegrenzung 16 versehen. Die Anschlüsse A1 und A2 im Zylinderinnenraum 11 sind über die Ventile V1 und V2 mit einem Druckluftanschluß 17 verbunden.

Am Anschluß D2 im Bodenstempelzylinder 8 mündet eine Verbindungsleitung 18, die von einer zweiten Kolben-Zylinderanordnung kommt, die im folgenden als Kraftverstärkungszylinder 19 bezeichnet wird. Dieser Zylinder 19 besteht aus zwei Zylinderräumen 20 und 21, die durch eine Zwischenwand 22 gegeneinander abgedichtet sind. In dem Zylinderinnenraum 21 ist ein Kolben 23 angeordnet, der über die Anschlüsse A4 und A5 beidseitig mit von 17 kommender Druckluft beaufschlagbar ist. Vom Kolben 23 führt eine Kolbenstange 24 durch die Zwischenwand 22 hindurch in den zweiten Zylinderinnenraum 20, der ein Hydraulikreservoir bildet, das etwa in mittlerer Höhe des Zylinderinneraums 20 eine Verengung 26 aufweist, deren Öffnungsdurchmesser gleich ist dem Durchmesser der Kolbenstange 24. Von dem Teil des Reservoirs, der sich oberhalb der Verengung 26 befindet, führt die Verbindungsleitung 18 vom Anschluss D1 des Kraftverstärkungszylinders 19 zum Anschluss D2 des Bodenstempelzylinders 8. Die beidseitige Druckluftbeaufschlagung des Kolbens 23 erfolgt über das Ventil V3, wobei hier der Luftdruck über den Regler 27 einstellbar ist. Wenn man von einem bei 17 anstehenden Luftdruck von 10 bar ausgeht, lässt sich der über das Ventil V3 gesteuerte Druck von 2 bis 10 bar regeln.

Die Funktionsweise der erfindungsgemäßen Vorrichtung wird im folgenden beschrieben:

Es befinden sich Bodenstempelzylinder 8, der Kraftverstärkungszylinder 19 und die Formstation 2 in ihrer Grundstellung. Zunächst wird der Verdränger 3 auf den Bodenstempel 1 aufgesetzt ist und mit Hilfe der Pneumatikzylinder 28 in seiner Stellung verriegelt. Über die Ventile V1 und V2 ist der Kolben 10 mittels Druckluft in Richtung Formstation 2 verfahren. Der Zylinderinnenraum 20 des Kraftverstärkungszylinders 19 wird aus dem Speicher 36 über die Leitung 35 mit Hydraulikflüssigkeit gefüllt, wobei im Hydraulikflüssigkeitspreicher 36 ein Überdruck von etwa 2 bar herrscht. Er ist zentral auf der nicht dargestellten Rundtischanlage angeordnet. Zu jeder Formstation führt eine Leitung 35. Daher ist zwischen Speicher 36 und Leitungen 35 ein Verteiler 37 angeordnet. Der Überdruck sorgt dafür, dass bei der Ausführung des Arbeitshubes des Bodenstempelzylinders 8 der Raum 20 und über die Leitung 18 der Raum 14 im Bodenstempelzylinder 8 mit Hydraulikflüssigkeit gefüllt wird, bevor dann der Krafthub erfolgen kann.

Hierzu wird der Kolben 23 im Kraftverstärkungszylinder 19 über V3 und den Anschluß A5 mit Druckluft beaufschlagt, wodurch der Kolben 23 in Richtung Zwischenwand 22 verfahren wird und die Kolbenstange 24 durch die Verengung 26 in den Teil des Reservoirs gelangt, der oberhalb der Verengung 26 angeordnet ist. Somit dient hier die Kolbenstange 24 als Kolben, der durch weiteres Nachschieben von Hydraulikflüssigkeit von D1 über die Leitung 18 und D 2 in den Druckraum 14 dient. Hierdurch wird eine über den Regler 27 regelbare Kraft aufgebracht, die zum Verpressen der Sohle benötigt wird.

Nachdem die Sohle ausreichend ausgehärtet ist, wird der Kolben 23 durch Druckluftbeaufschlagung über den Anschluß A4 zurückgefahren und gleichzeitig auch der Kolben 10 mittels Druckluftbeaufschlagung über den Anschluß A1. Hierdurch drückt der Kolben 13 über die Leitung 19 die Hydraulikflüssigkeit wieder zurück in das Reservoir im Zylinderinnenraum 20 des Kraftverstärkungszylinders 19.

Die fertiggespritzte Laufsohle dient nun im Bodenstempel 1 als untere Formhohlraumbegrenzung, während die obere Formhohlraumbegrenzung nun der mit einem Schaft bezogene Leisten ist. Der Leisten wird nicht verriegelt. Da zur Herstellung der Zwischensohle kein zusätzlicher Kraftaufwand erforderlich ist, bleibt der Kolben 23 in diesem Fall untätig.

## Patentansprüche

1. Verfahren zum Aufbringen der Schließkraft an einer Spritzgießmaschine zur Herstellung von Schuhen und Sohlen hierfür, die mehrere Formwerkzeuge für die zu fertigende bzw. anzuformende Sohle aufweist, die jeweils aus Seitenformteilen, einem vertikal verfahrbaren Bodenstempel (1) und einem Verdränger (3) bzw. einem mit einem Schuhschaft bezogenen Leisten als obere Formhohlraumbegrenzung gebildet ist, wobei nach dem Aufsetzen des Leistens bzw. nach dem Aufsetzen und Verriegeln des Verdrängers (3) der Bodenstempel (1) mittels einer Kolben-Zylinderanordnung (8) zunächst mit einem pneumatischen Arbeitshub in die Stellung zum verfüllen des Hohlraums gefahren wird, wonach die Zylinder-Kolbenanordnung (8) mittels einer zweiten, mit der Zylinder-Kolbenanordnung (8) in Verbindung stehenden, aber räumlich von dieser getrennten Zylinder-Kolbenanordnung (19) mittels einstellbarer variabler hydraulischer Kraftverstärkung einen hydraulischen Krafthub zum Verpressen des eingefüllten Materials zur Bildung der Sohle ausführt, der so lange gehalten wird, bis die Sohle formstabil ist, wobei bei einem vorgegebenen pneumatischen Arbeitsdruck der Arbeitshub mit einer konstanten Kraft und der Krafthub mit einer regelbaren Kraft ausgeführt wird, die gleich ist oder größer als die Kraft des Arbeitshubes und durch Regelung des pneumatischen Drucks erzeugt wird, wobei bei der Ausführung des Arbeitshubes der Kolben-Zylinderanordnung (8) der Kolben-Zylinderanordnung (19) die für die Ausführung des Krafthubs erforderliche Menge an Hydraulikflüssigkeit von einem allen Formwerkzeugen gemeinsamen Speicher (36) zur Verfügung gestellt wird.

2. Vorrichtung zur Durchführung des Verfahrens nach Anspruch 1, wobei die den Bodenstempel (1) verfahrende Kolben-Zylinderanordnung (8) mit zwei gegeneinander abgedichteten Zylinderräumen (11,12) versehen ist, und in einem der Zylinderräume (11) ein beidseitig mit Druckluft beaufschlagbarer Kolben (10) verschiebbar ist, während im zweiten Zylinderraum (12) ein einseitig mit einem hydraulischen Druckmedium beaufschlagbarer Kolben (13) verschiebbar ist, und beide Kolben (10,13) starr miteinander verbunden sind, wobei das hydraulische Druckmedium mittels pneumatischen Drucks aus einem mit dem zweiten Zylinderraum (12,14) verbundenen Reservoir (20) in diesen hineindrückbar und aus diesem in das Reservoir (20) zurückführbar ist, wobei das Reservoir (20) Teil einer zweiten Kolben-Zylinderanordnung (19) ist, die räumlich von der Zylinderkolbenanordnung (8) getrennt ist und die aus zwei gegeneinander abgedichteten Kammern (20,21) gebildet ist, wobei in einer der Kammern (21) ein beidseitig mit Druckluft beaufschlagbarer Kolben (23) verschiebbar ist, dessen Kolbenstange (24) in die zweite Kammer (20) hineinreicht und das Reservoir in Richtung Kolbenstangenende eine Querschnittsverengung (26) aufweist, durch die die Kolbenstange (24) die Verengung (26) dicht verschließend in den Teil des Reservoirs einschiebbar ist, der sich jenseits der Verengung (26) befindet und der über eine Leitung (18) mit dem zweiten Zylinderraum (12,14) der Kolben-Zylinderanordnung (8) verbunden ist und wobei in den Teil des Reservoirs (20), der sich unterhalb der Verengung (26) befindet, eine Hydraulikflüssigkeit-Leitung (35) mündet, die von einem Speicher (36) kommt, in dem ein Überdruck herrscht und der über einen Verteiler (37) mit allen Formstationen der Spritzgießmaschine in Verbindung steht.

3. Vorrichtung nach Anspruch 2, **dadurch gekennzeichnet, dass** in die Druckluftversorgungsleitung zum beidseitig mit Druckluft beaufschlagbaren Kolben (23) in der Kolben-Zylinderanordnung (19) ein Druckregler (27) eingebaut ist.

4. Vorrichtung nach einem der Ansprüche 2 oder 3, **dadurch gekennzeichnet, dass** die Kolben-Zylinderanordnung (8) einen im Längsschnitt T-förmigen Zylinderinnenraum (11,12) aufweist, wobei der Querbalken des T den Zylinderraum (11) repräsentiert, in dem der beidseitig mit Druckluft beaufschlagbare Kolben (10) angeordnet ist und der Längsbalken des T den Zylinderraum (12), in dem der einseitig mit dem hydraulischen Medium beaufschlagbare Kolben (13) angeordnet ist, und beide Kolben (10,13) eine Einheit bilden.

5. Vorrichtung nach einem der Ansprüche 3 bis 5, **dadurch gekennzeichnet, dass** der Druckregler (27) ein manuell verstellbarer Druckminderer ist.

6. Vorrichtung nach einem der Ansprüche 3 bis 5, **dadurch gekennzeichnet, dass** der Druckregler (27) ein von einem Bedienterminal einstellbares Proportionalventil ist.

7. Vorrichtung nach einem der Ansprüche 2 bis 7, **dadurch gekennzeichnet, dass** dem beidseitig beaufschlagbaren Kolben (23) in der Kolben-Zylinderansordnung (19) ein Ventil (V3) zugeordnet ist, welches unabhängig ist von den Ventilen (V1, V2), die dem beidseitig beaufschlagbaren Kolben (15) der Kolben-Zylinderanordnung (8) bzw. dem einseitig beaufschlagbaren Kolben (25) der Kolben-Zylinderanordung (19) zugeordnet sind.

## Claims

1. Method for application of closing pressure on an injection moulding machine for the manufacture of shoes and soles for the latter, which has several form tools for the soles to be produced and/or moulded, which is each formed from side moulding parts, a vertically movable headstamp (1) and a displacer (3) or a last covered with a shoe upper as upper die cavity limit, whereby after the putting-on of the last or after the putting-on and locking of the displacer (3), the headstamp (1) is firstly moved by means of a piston-cylinder arrangement (8) with a pneumatic working stroke into the position for filling the die after which the piston-cylinder arrangement (8), by means of a second piston-cylinder arrangement (19), connected with the piston-cylinder arrangement (8) but spatially separated from it, executes a hydraulic power stroke by means of adjustable variable hydraulic power assist to compress the filling material forming the sole, which is maintained until the sole is dimensionally stable, whereby at a specified pneumatic working pressure the working stroke is executed at a constant force and the power stroke is executed at an adjustable force which is equal to or greater than the force of the working stroke and is generated by adjusting the pneumatic pressure, whereby in the execution of the working stroke by the piston-cylinder arrangement (8) via the piston-cylinder arrangement (19), the necessary quantity of hydraulic fluid is supplied by a reservoir (36) common to all form tools.

2. Device for implementation of the method according to claim 1, whereby the piston-cylinder arrangement (8) displacing the headstamp (1) is equipped with two cylinder chambers (11, 12) sealed off from each other and in one of the cylinder chambers (11) a piston (10) which can be impinged upon by compressed air on both sides is displaceable, while in the second cylinder chamber (12) a piston (13) which can be acted on unilaterally by a hydraulic pressure medium is displaceable, and both pistons (10, 13) are rigidly connected, whereby the hydraulic pressure medium can be forced by pneumatic pressure into a reservoir (20) connected with the second cylinder chamber (12, 14) into the latter and can pass back from this into the reservoir (20), whereby the reservoir (20) is part of a second piston-cylinder arrangement (19) which is spatially separated from the piston-cylinder arrangement (8) and which is formed from two chambers (20, 21) whereby in one of the chambers (21) a piston (10) which can be impinged upon with compressed air on both sides is displaceable, the piston rod (24) of which extends into the second chamber (20) and the reservoir has a throat (26) towards the piston rod end through which the piston rod (24) can be inserted into the throat (26) forming a seal in the part of the reservoir which lies beyond the throat (26) and which is connected via a pipe (18) with the second cylinder chamber (12, 14) of the piston-cylinder arrangement (8) and whereby a hydraulic fluid line (35) leads into a part of the reservoir (20) which lies beneath the throat (26), said fluid line coming from a reservoir (36) in which overpressure prevails and which is connected via a distributor (37) with all form stations of the injection moulding machine.

3. Device according to claim 2, **characterised in that** a pressure regulator (27) is installed in the piston-cylinder arrangement (19) in the compressed air supply line to the piston (23) which can be impinged upon bilaterally by compressed air.

4. Device according to one of claims 2 or 3, **characterised in that** the piston-cylinder arrangement (8) has a cylinder chamber (11,12) which is T-shaped in longitudinal section, whereby the crossbar of the T represents the cylinder chamber (11) in which the piston (10) which can be impinged upon bilaterally by compressed air is disposed and the long bar of the T represents the cylinder chamber (12) in which the piston (13) which can be impinged upon unilaterally by a hydraulic pressure medium is disposed, and the two pistons (10, 13) form one unit.

5. Device according to one of claims 3 to 5 **characterised in that** the pressure regulator (27) is a manually-adjustable pressure reducer.

6. Device according to one of claims 3 to 5, **characterised in that** the pressure regulator (27) is a proportional valve adjustable from an operating terminal.

7. Device according to one of claims 2 to 7 **characterised in that** the piston (23) which can be impinged upon bilaterally by compressed air in the piston-cylinder arrangement (19) is assigned a valve (V3) which is independent of the valves (V1, V2) which are assigned to the piston (13) which can be impinged upon bilaterally of the piston-cylinder arrangement (8) and of the piston (10) which can be acted on bilaterally of the piston-cylinder arrangement (19).

## Revendications

1. Procédé pour appliquer la force de fermeture à une machine à mouler par injection pour la fabrication de chaussures et de semelles pour celles-ci, qui comporte plusieurs outils de moulage pour la semelle à fabriquer ou à surmouler, dont chacun est formé par des parties latérales de moule, d'un poinçon de fond (1) déplaçable verticalement et d'un organe déplaceur (3) ou d'une forme revêtu d'une tige de chaussure et servant de délimitation supérieure à la cavité du moule, dans lequel après la mise en place de la forme ou après la mise en place et le verrouillage de l'organe déplaceur (3), le poinçon de fond (1) est déplacé, au moyen d'un dispositif à cylindre et piston (8), d'abord par une course de travail pneumatique dans la position de remplissage de la cavité, après quoi le dispositif à cylindre et piston (8) exerce, au moyen d'un deuxième dispositif à cylindre et piston (19) en liaison avec le dispositif à cylindre et piston (8), mais séparé dans l'espace de celui-ci, par amplification hydraulique réglable et variable de la force, une course de force hydraulique pour presser le matériau introduit afin de former la semelle, cette course étant maintenue jusqu'à ce que la semelle soit indéformable, dans lequel pour une pression de travail pneumatique prédéfinie, la course de travail est exécutée avec une force constante et la course de force avec une force réglable qui est égale ou supérieure à la force de la course de travail, et produite par régulation de la pression pneumatique, dans lequel, lors de l'exécution de la course de travail du dispositif à cylindre et piston (8), la quantité de liquide hydraulique, nécessaire pour l'exécution de la course de force, est fournie au dispositif à cylindre et piston (19) par un accumulateur (36) commun à tous les outils de moulage.

2. Dispositif pour la mise en oeuvre du procédé selon la revendication 1, dans lequel le dispositif à cylindre et piston (8), déplaçant le poinçon de fond (1), est pourvu de deux compartiments de cylindre (11, 12) étanches l'un par rapport à l'autre, et dans l'un des compartiments de cylindre (11) peut coulisser un piston (10) qui peut être soumis des deux côtés à de l'air comprimé, tandis que dans le deuxième compartiment de cylindre (12) peut coulisser un piston (13) qui peut être soumis d'un côté à un fluide sous pression hydraulique, et les deux pistons (10, 13) sont reliés entre eux de manière fixe, dans lequel le fluide sous pression hydraulique peut être envoyé, au moyen d'une pression pneumatique, depuis un réservoir (20) relié au deuxième compartiment de cylindre (12, 14), à l'intérieur de celui-ci, et peut être ramené de celui-ci dans le réservoir (20), dans lequel le réservoir (20) fait partie d'un deuxième dispositif à cylindre et piston (19) qui est séparé dans l'espace du dispositif à cylindre et piston (8), et est formé par deux chambres (20, 21) étanches l'une par rapport à l'autre, dans lequel dans l'une des chambres (21) peut coulisser un piston (23) qui peut être soumis des deux côtés à de l'air comprimé, et dont la tige de piston (24) pénètre à l'intérieur de la deuxième chambre (20), et le réservoir présente, en direction de l'extrémité de la tige de piston un rétrécissement (26) de section par lequel la tige de piston (24) peut être introduite, en fermant de manière étanche le rétrécissement (26), dans la partie du réservoir qui se trouve de l'autre côté du rétrécissement (26) et qui est reliée, par une conduite (18), au deuxième compartiment de cylindre (12, 14) du dispositif à cylindre et piston (8), et dans lequel, dans la partie du réservoir (20) qui se trouve au-dessous du rétrécissement (26), débouche une conduite de fluide hydraulique (35) qui provient d'un accumulateur (36) dans lequel règne une surpression et qui communique par un distributeur (37) avec tous les postes de moulage de la machine à mouler par injection.

3. Dispositif selon la revendication 2, **caractérisé en ce qu'**un régulateur de pression (27) est monté à l'intérieur de la conduite d'alimentation en air comprimé menant au piston (23), pouvant être soumis des deux côtés à de l'air comprimé, dans le dispositif à cylindre et piston (19).

4. Dispositif selon l'une des revendications 2 ou 3, **caractérisé en ce que** le dispositif à cylindre et piston (8) présente un compartiment intérieur de cylindre (11, 12) en forme de T en coupe longitudinale, la barre transversale du T représentant le compartiment de cylindre (11) dans lequel est disposé le piston (10) qui peut être soumis des deux côtés à de l'air comprimé, et la barre longitudinale du T représentant le compartiment de cylindre (12) dans lequel est disposé le piston (13) qui peut être soumis d'un côté au fluide hydraulique, et les deux pistons (10, 13) forment une unité.

5. Dispositif selon l'une des revendications 3 à 5, **caractérisé en ce que** le régulateur de pression (27) est un réducteur de pression réglable manuellement.

6. Dispositif selon l'une des revendications 3 à 5, **caractérisé en ce que** le régulateur de pression (27) est une soupape proportionnelle réglable depuis un terminal de commande.

7. Dispositif selon l'une des revendications 2 à 7, **caractérisé en ce qu'**au piston (23), qui peut être sollicité des deux côtés, dans le dispositif à cylindre et piston (19), est associée une soupape (V3) qui est indépendante des soupapes (V1, V2) qui sont associées au piston (10), pouvant être sollicité des deux côtés, du dispositif à cylindre et piston (8), ou au piston (25), pouvant être sollicité d'un côté, du dispositif à cylindre et piston (19).
